# EUROPÄISCHE PATENTSCHRIFT

(11) **EP 1 226 218 B1**
(45) Veröffentlichungstag und Bekanntmachung des Hinweises auf die Patenterteilung: **05.03.2008**
(21) Anmeldenummer: 00972682.9
(22) Anmeldetag: 05.10.2000
(51) Int. Cl.: C09D 175/06, C09D 5/24, C08G 18/08

(54) **ELEKTRISCH LEITFÄHIGER HYDROPRIMER FÜR KUNSTSTOFFE**
ELECTRICALLY CONDUCTING HYDROPRIMER FOR PLASTICS
COUCHE DE FOND AQUEUSE ELECTROCONDUCTRICE POUR MATIERES PLASTIQUES

(30) Priorität: 09.10.1999 DE 19948821
(43) Veröffentlichungstag der Anmeldung: 31.07.2002
(73) Patentinhaber: BASF Coatings AG, 48165 Münster (DE)
(72) Erfinder: WILKE, Guido, 48151 Münster (DE)
(86) Internationale Anmeldenummer: PCT/EP2000/009754
(87) Internationale Veröffentlichungsnummer: WO 2001/027211

(56) Entgegenhaltungen:
- DE-C- 19 644 615
- US-A- 5 696 196
- DATABASE WPI Section Ch, Week 199339 Derwent Publications Ltd., London, GB; Class A14, AN 1993-306189 XP002160053 & JP 05 217147 A (KONICA CORP), 27. August 1993 (1993-08-27)
- DATABASE WPI Section Ch, Week 198723 Derwent Publications Ltd., London, GB; Class A25, AN 1987-160457 XP002160054 & JP 62 095342 A (TOYO RUBBER IND CO LTD), 1. Mai 1987 (1987-05-01)

## Beschreibung

Die vorliegende Erfindung betrifft einen neuen elektrisch leitfähigen Hydroprimer (Grundierung auf Wasserbasis) für Kunststoffe. Des weiteren betrifft die vorliegende Erfindung ein neues Verfahren zum Lackieren von Kunststoffen.

In der Industrie werden heute zunehmend Formteile auf Kunststoffbasis verwendet, die zusammen mit Metallteilen eingesetzt werden und die einer Lackierung bedürfen. Dies gilt insbesondere für Kraftfahrzeugteile, die in zunehmendem Maße aus Kunststoffteilen gefertigt werden, wie beispielsweise Stoßfängerverkleidungen, Spoiler, Schweller, Radhausverkleidungen und seitliche Verkleidungen bzw. Schutzleisten.

Zur Verbesserung der Schlagzähigkeit, insbesondere der Kälteschlagzähigkeit, enthalten diese Kunststoffe hydrophobe oligomere Kautschuke, die mit wäßrigen Lacken grundsätzlich nicht verträglich sind. Diese Kautschuke tragen zu der Bildung einer hydrophoben Grenzschicht zwischen Hydroprimer und Kunststoffteil und somit zur Delamination der Mehrschichtlackierung bei.

Diesem Problem kann man durch die Verwendung von Grundierungen oder Primem auf der Basis von organischen Lösemitteln begegnen, die ein gewisse Anlösen oder Anquellen der Kunststoffoberfläche und damit eine bessere Verankerung der Primerschicht bewirken. Der hohe Gehalt an Lösemitteln kann jedoch zu einer Schädigung des Kunststoffteils, beispielweise durch Mikrorisse, führen. Außerdem werden bei der Herstellung, der Applikation und der Härtung erhebliche Mengen an Lösemitteln freigesetzt, was aus Gründen des Umweltschutzes nicht mehr vertretbar ist.

Die Delamination von Hydroprimerlackierungen könnte verhindert werden, indem man die Hydroprimerschicht bei Temperaturen > 100°C einbrennt. Dies verbietet sich indes im Hinblick auf die fehlende Formstabilität der allermeisten Kuststoffe bei diesen Temperaturen von selbst. Auch durch ein Beflammen der Oberfläche der Kunststoffteile kann die Delamination der Hydroprimerlackierung unterdrückt werden. Allerdings stellt diese Vorbehandlung einen zusätzlichen Verfahrensschritt und damit einen zusätzlichen Kostenfaktor und eine zusätzliche Fehlerquelle dar.

Aufgabe der vorliegenden Erfindung ist es, einen neuen Hydroprimer für Kunststoffteile zu finden, der die Nachteile des Standes der Technik nicht mehr länger aufweist, sondern es gestattet, Hydroprimerlackierungen für Mehrschichtlackierungen herzustellen, die auch auf unbeflammten Kunststoffoberflächen und nach der thermischen Härtung bei Temperaturen <100°C fest haften und nicht delaminieren sowie die nachfolgende elektrostatische Spritzapplikation von Unidecklacken, Basislacken und/oder Klarlacken unterstützen bzw. ermöglichen. Außerdem sollen die Primerlackierungen im Rahmen einer farb- und/oder effektgebenden Mehrschichtlackierung eine vorzügliche Zwischenschichthaftung haben.

Demgemäß wurde der neue Hydroprimer für Kunststoffe gefunden, der
I) mindestens eine Komponente, enthaltend
   A) mindstens eine wäßrige Polyurethandispersion
   B) mindestens ein elektrisch leitfähiges Pigment; und
II) mindestens eine Komponente enthaltend mindestens ein Polyisocyanat,
enthält, wobei mindestens eine der Komponenten I und/oder II mindestens ein aromatisches Lösemittel (D) in einer Menge von 0,25 bis 4 Gew.-%, bezogen auf die Gesamtmenge des Hydroprimers enthält.

Im folgenden wird der neue elektrisch leifähige Hydroprimer für Kunststoffe als "erfindungsgemäßer Hydroprimer" bezeichnet.

Außerdem wurde das neue Verfahren zur Herstellung farb- und/oder effektgebender Mehrschichtlackierungen auf Kuststoffteilen durch
1a) Applikation des erfindungsgemäßen Hydroprimers und thermische Härtung der resultierenden Hydroprimerschicht, wodurch die elektrisch leitfähige Hydroprimerlackierung resultiert; oder alternativ
1b) Applikation des erfindungsgemäßen Hydroprimers gemäß einem der Ansprüche 1 bis 10, Trocken der resultierenden elektrisch leitfähigen Hydroprimerschicht, Applikation einer hellen Hydroprimerschicht und gemeinsame thermische Härtung der resultierenden elektrisch leitfähigen Hydroprimerschicht und der hellen Hydroprimerschicht, wodurch die elektrisch leitfähige Hydroprimerschicht und die helle Hydroprimerschicht resultiert; und
2a) Applikation eines Unidecklacks und thermische Härtung der resultierenden Unidecklackschicht, wodurch eine Unidecklackierung resultiert; oder alternativ
2b) Applikation eines Wasserbasislacks und Antrocknen der resultierenden Wasserbasislackschicht und
3) Applikation eines Klarlacks und gemeinsame thermische Härtung oder thermische Härtung und Härtung mit aktinischem Licht der resultierenden Klarlackschicht und der Wasserbasislackschicht, wodurch die Basislackierung und die Klarlackierung resultieren;
gefunden.

Im folgenden wird das neue Verfahren zur Herstellung farb- und/oder effektgebender Mehrschichtlackierungen auf Kuststoffteilen der Kürze halber als "erfindungsgemäßes Verfahren" bezeichnet.

Des weiteren wurde die neue farb- und oder effektgebende Mehrschichtlackierung für Kunststoffteile gefunden, die die folgenden Schichten in der angegebenen Reihenfolge übereinanderliegend enthält:
1a) eine erfindungsgemäße Hydroprimerlackierung oder alternativ
1a) eine erfindungsgemäße Hydroprimerlackierung und
1b) eine helle Hydroprimerlackierung sowie
2a) eine Unidecklackierung oder alternativ
2b) eine Basislackierung und
3) eine Klarlackierung.

Im folgenden wird die neue farb- und oder effektgebende Mehrschichtlackierung für Kunststoffteile als erfindungsgemäße Mehrschichtlackierung" bezeichnet.

Nicht zuletzt wurden die neuen Kuststoffteile gefunden, die mit mindestens einer erfindungsgemäßen Mehrschichtlackierung und/oder mit mindestens einer gemäß dem erfindungsgemäßen Verfahren hergestellten Mehrschichtlackierung beschichtet sind und die im folgenden als erfindungsgemäße Kunststoffteile bezeichnet werden.

Weitere Erfindungsgegenstände ergeben sich aus der nachfolgenden Beschreibung.

Im Hinblick auf den Stand der Technik war es überraschend und für den Fachmann nicht vorhersehbar, daß die Aufgabe der vorliegenden Erfindung ausgerechnet durch die Zugabe verleichsweise geringer Mengen eines aromatischen Lösemittels zu dem erfindungsgemäßen Hydroprimer gelöst werden konnte. Insbesondere war es überraschend, daß durch diese Maßnahme nicht nur die Probleme der Haftung zwischen den Kunststoffteilen und der Hydroprimerlackierung, sondern auch zwischen der Hydroprimerlackierung und den hierauf befindlichen sonstigen Lackierungen, insbesondere der hellen Hydroprimerlackierung, der Unidecklackierung oder der Basislackierung/Klarlackierung gelöst werden konnte und dies bei Anwendung einer Härtungstemperatur ≤100°C. Hierbei erweist sich als weiterer überraschender Vorteil des erfindungsgemäßen Hdroprimers, daß er keine Schädigung der Kunststoffteile etwa durch Mikrorißbildung bewirkt und die Emission organischer Verbindungen bei der Handhabung und der Härtung des erfindungsgemäßen Hydroprimers gegenüber herkömlichen Hydroprimern nur unwesentlich gesteigert ist.

Bei dem erfindungsgemäßen Hydroprimer handelt es sich um ein Zwei- oder Mehrkomponetensystem, insbesondere um ein Zweikomponentensystem.

Im Rahmen der vorliegenden Erfindung ist hierunter ein Beschichtungsstoff zu verstehen, bei dem insbesondere das Bindemittel, insbesondere die wäßrige Bindemittelispersion, und das Vernetzungsmittel getrennt voneinander in mindestens zwei Komponenten vorliegen, die erst kurz vor der Applikation zusammengegeben werden. Diese Form wird dann gewählt, wenn Bindemittel, insbesondere die wäßrige Bindemittelispersion, und Vernetzungsmittel bereits bei Temperaturen ≤100°C, insbesondere bei Raumtemperatur, miteinander reagieren. Beschichtungsstoffe dieser Art werden vor allem zur Beschichtung thermisch empfindlicher Substrate wie Kunststoffteile angewandt.

Demnach enthält der erfindungsgemäße Hydroprimer mindestens eine, insbesondere eine, Komponente I sowie mindestens eine, insbesondere eine, Komponte II oder er besteht aus diesen Komponenten.

Die Komponente I enthält als wesentlichen Bestandteil mindestens eine, insbesondere eine Polyurethandispersion (A).

Geeignete Polyurethandispersionen (A) sind üblich und bekannt und im Handel erhältlich. Sie enthalten bekanntermaßen mindestens ein in Wasser lösliches oder dispergierbares Polyurethan (A), bei denen es sich insbesondere um Polyester-Polyurethane (A) handelt.

Geeignete Polyester-Polyurethane (A) enthalten üblicherweise (potentiell) kationische funktionelle Gruppen (a11) oder (potentiell) anionische funktionelle Gruppen (a12). Anstelle dieser funktionellen Gruppen oder zusätzlich zu diesen können sie nichtionische funktionellen Gruppen (a13) auf der Basis von Polyalkylenethem enthalten.

Beispiele geeigneter erfindungsgemäß zu verwendender funktioneller Gruppen (a11), die durch Neutralisationsmittel und/oder Quatemisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (a11) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber quaternäre Ammoniumgruppen.

Beispiele geeigneter erfindungsgemäß zu verwendender funktioneller Gruppen (a12), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (a12) sind Carboxylat-, Sulfonat- oder Phosphonatgruppen, insbesondere Carboxylatgruppen.

Die Auswahl der Gruppen (a11) oder (a12) ist so zu treffen, daß keine störenden Reaktionen, insbesondere keine unerwünschte Komplex- und/oder Salzbildung und/oder Vernetzungsreaktion mit den weiteren Bestandteilen der Komponente I oder sonstiger Bestandteile des erfindungsgemäßen Hydroprimers eintreten. Der Fachmann kann daher die Auswahl in einfacher Weise anhand seines Fachwissens treffen.

Beispiele geeigneter Neutralisationsmittel für in Kationen umwandelbare funktionelle Gruppen (a11) sind anorganische und organische Säuren wie Schwefelsäure, Salzsäure, Phosphorsäure, Ameisensäure, Essigsäure, Milchsäure, Dimethylolpropionsäure oder Zitronensäure, insbesondere Ameisensäure, Essigsäure oder Milchsäure.

Beispiele für geeignete Neutralisationsmittel für in Anionen umwandelbare funktionelle Gruppen (a12) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen.

Im allgemeinen wird die Menge an Neutralisationsmittel so gewählt, daß 1 bis 100 Äquivalente, bevorzugt 50 bis 90 Äquivalente der funktionellen Gruppen (a11) oder (a12) des Polyester-Polyurethans (A) neutralisiert werden.

Die Polyester-Polyurethane (A) werden erhalten durch die Umsetzung von
- Polyesterpolyolen und
- Verbindungen, durch welche die stabilisierenden (potentiell) ionischen Gruppen (a11) oder (a12) und/oder die nichtionischen funktionellen Gruppen (a13) eingeführt werden, sowie gegebenenfalls
- Polyaminen und
- Aminolakoholen
mit Polyisocyanaten.

Die Polyesterpolyole sind erhältlich durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen.

Beispiele für geeigente Polycarbonsäuren sind aromatische, aliphatische und cycloaliphatische Polycarbonsäuren. Bevorzugt werden aromatische und/oder aliphatische, insbesondere aromatische, Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure, Dodecandicarbonsäure oder Dimerfettsäuren oder Maleinsäure, Fumarsäure oder Itaconsäure von denen Adipinsäure, Glutarsäure, Azelainsäure, Sebacinsäure, Dimerfettsäuren und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Geeignet sind auch die veresterungsfähigen Derivate der obengenannten Polycarbonsäuren, wie z.B. deren ein- oder mehrwertige Ester mit aliphatischen Alkoholen mit 1 bis 4-C-Atomen oder Polyolen mit 1 bis 4 C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure, Laurinsäure, Isononansäure, Fettsäuren natürlich vorkommender Öle, Acrylsäure, Methacrylsäure, Ethacrylsäure oder Crotonsäure. Bevorzugt wird als Monocarbonsäure Isononansäure eingesetzt.

Beispiele geeigneter Polyole sind Diole und Triole, insbesondere Diole. Üblicherweise werden Triole neben den Diolen in untergeordneten Mengen verwendet, um Verzweigungen in die Polyesterpolyole einzuführen.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol oder die stellungsisomeren Diethyloctandiole. Diese Diole können auch als solche für die Herstellung der erfindungsgemäß zu verwendenden Polyurethane (A) eingesetzt werden.

Weitere Beispiele geeigneter Diole sind Diole der Formel I oder II: 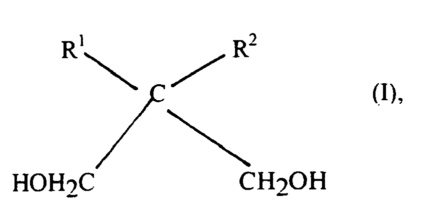 in der R¹ und R² jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R¹ und/oder R² nicht Methyl sein darf; 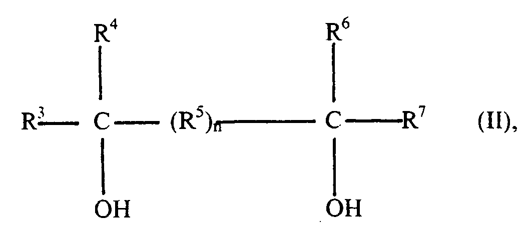 in der R³, R⁴, R⁶ und R⁷ jeweils gleiche oder verschiedene Reste darstellen und für einen Alkylrest mit 1 bis 6 C-Atomen, einen Cycloalkylrest oder einen Arylrest stehen und R⁵ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole I der allgemeinen Formel I sind alle Propandiole der Formel geeignet, bei denen entweder R¹ oder R² oder R¹ und R² nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3 und andere.

Als Diole II der allgemeinen Formel II können beispielsweise 2,5-Dimethylhexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Von diesen Diolen sind Hexandiol und Neopentylglykol besonders vorteilhaft und werden deshalb besonders bevorzugt verwendet.

Die vorstehend genannten Diole können auch als solche für die Herstellung der Polyester-Polyurethane mit eingesetzt werden.

Beispiele geeigneter Triole sind Trimethylolethan, Trimethylolpropan oder Glycerin, insbesondere Trimethylolpropan.

Die vorstehend genannten Triole können auch als solche für die Herstellung der Polyester-Polyurethane mit eingesetzt werden (vgl. die Patentschrift EP-A-0 339 433).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Allylalkohol oder Phenol.

Die Herstellung der Polyesterpolyole kann in Gegenwart geringer Mengen eines geeigneten Lösemittels als Schleppmittel durchgeführt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR⁸)ₘ- CH₂-O-)- aus. Hierbei ist der Index m bevorzugt 4 bis 6 und der Substitutent R⁸ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ###-Caprolacton, bei dem m den Wert 4 hat und alle R⁸-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Polyetherpolyole, insbesondere mit einem zahlenmittleren Molekulargewicht von 400 bis 5000, insbesondere von 400 bis 3000, könne neben den vorstehend beschriebenen Polyesterpolyolen verwendet werden. Gut geeignete Polyetherdiole sind z.B. Polyetherdiole der allgemeinen Formel H-(-O-(CHR⁹)ₒ-)ₚOH, wobei der Substituent R⁹ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Die Polyetherdiole sollen einerseits keine übermäßigen Mengen an Ethergruppen einbringen, weil sonst die gebildeten Polyurethane in Wasser anquellen. Andererseits können sie in Mengen verwendet werden, welche die nichtionische Stabilisierung der Polyurethane gewährleisten. Sie dienen dann als kettenständige funktionelle nichtionische Gruppen (a13).

Die Einführung von (potentiell) kationischen funktionellen Gruppen (a11) erfolgt über den Einbau von Verbindungen, die mindestens eine, insbesondere zwei, gegenüber Isocyanatgruppen reaktive und mindestens eine zur Kationenbildung befähigte Gruppe im Molekül enthalten; die einzusetzende Menge kann aus der angestrebten Aminzahl berechnet werden.

Geeignete gegenüber Isocyanatgruppen reaktive Gruppen sind insbesondere Hydroxylgruppen sowie primäre und/oder sekundäre Aminogruppen, von denen die Hydroxylgruppen bevorzugt verwendet werden.

Beispiele geeigneter Verbindungen dieser Art sind 2,2-Dimethylolethyl- oder - propylamin, die mit einem Keton blockiert sind, wobei die resultierende Ketoximgruppe vor der Bildung der kationischen Gruppe (b11) wieder hydrolysiert wird, oder N,N-Dimethyl-, N,N-Diethyl- oder N-Methyl-N-ethyl-2,2-dimethylolethyl- oder-propylamin.

Die Einführung von (potentiell) anionischen Gruppen (a12) in die Polyurethanmoleküle erfolgt über den Einbau von Verbindungen, die mindestens eine gegenüber Isocyanatgruppen reaktive und eine zur Anionenbildung befähigte Gruppe im Molekül enthalten; die einzusetzende Menge kann aus der angestrebten Säurezahl berechnet werden.

Beispiele geeigneter Verbindungen dieser Art sind solche, die zwei gegenüber Isocyanatgruppen reaktive Gruppen im Molekül enthalten. Geeignete gegenüber Isocyanatgruppen reaktive Gruppen sind insbesondere Hydroxylgruppen, sowie primäre und/oder sekundäre Aminogruppen. Demnach können beispielsweise Alkansäuren mit zwei Substituenten am ###-ständigem Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben 2 bis etwa 25, vorzugsweise 3 bis 10 Kohlenstoffatome. Beispiele geeigneter Alkansäuren sind Dihydroxypropionsäure, Dihydroxybemsteinsäure und Dihydroxybenzoesäure. Eine besonders bevorzugte Gruppe von Alkansäuren sind die ###,###-Dimethylolalkansäuren der allgemeinen Formel R¹⁰-C(CH₂OH)₂COOH, wobei R¹⁰ für ein Wasserstoffatom oder eine Alkylgruppe mit bis zu etwa 20 Kohlenstoffatomen steht. Beispiele besonders gut geeigneter Alkansäuren sind 2,2-Dimethylolessigsäure, 2,2-Dimethylolpropionsäure, 2,2-Dimethylolbuttersäure und 2,2-Dimenthylolpentansäure. Die bevorzugte Dihydroxyalkansäure ist 2,2-Dimethylolpropionsäure. Aminogruppenhaltige Verbindungen sind beispielsweise ###,###-Diaminovaleriansäure, 3,4-Diaminobenzoesäure, 2,4-Diaminotoluolsulfonsäure und 2,4-Diaminodiphenylethersulfonsäure.

Nichtionische stabilisierende Poly(oxyalkylen)gruppen (a13) können als laterale oder endständige Gruppen in die Polyurethanmoleküle eingeführt werden. Hierfür können beispielsweise Alkoxypoly(oxyalkylen)alkohole mit der allgemeinen Formel R¹¹O-(-CH₂-CH¹²-O-)ᵣ H in der R¹¹ für einen Alkylrest mit 1 bis 6 Kohlenstoffatomen, R¹² für ein Wasserstoffatom oder einen Alkylrest mit 1 bis 6 Kohlenstoffatomen und der Index r für eine Zahl zwischen 20 und 75 steht, eingesetzt werden. (vgl. die Patentschriften EP-A-0 354 261 oder EP-A-0 424 705).

Als Polyisocyanate kommen grundsätzlich alle der üblichen und bekannten, auf dem Lackgebiet verwendeten aliphatischen, cycloaliphatischen, aliphatischcycloaliphatischen, aromatischen, aliphatisch-aromatischen und/oder cycloaliphatisch-aromatischen Polyisocyanate und Polyisocyanataddukte in Betracht, welche auch als Lackpolyisocyanate bezeichnet werden. Besonders gut geeignete Polyisocyanate sind Diisocyanate.

Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan, Dicyclohexylmethan-2,4'-diisocyanat, Dicyclohexylmethan-4,4'-diisocyanat, flüssiges Dicyclohexylmethan-4,4'-diisocyanat eines trans/trans-Gehalts von bis zu 30 Gew.-%, vorzugsweise 25 Gew.-% und insbesondere 20 Gew.-%, das durch Phosgenierung von Isomerengemischen des Bis(4-aminocyclohexyl)methans oder durch fraktionierte Kristallisation von handelsüblichem Bis(4-isocyanatocyclohexyl)methan gemäß den Patentschriften DE-A-44 14 032, GB-A-1220717, DE-A-16 18 795 oder DE-A-17 93 785 erhältlich ist; Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, m-Tetramethylxylylendiisocyanat (= 1,3-Bis-(2-isocyanatoprop-2-yl)-benzol oder Toluylendiisocyanat.

Neben den Diisocyanaten können höherfunktionelle Polyisocyanate mit einer statistischen mittleren Funktionalität von 2,5 bis 6, insbesondere 2,5 bis 5, in untergeordneten Mengen verwendet werden. Im Rahmen der vorliegenden Erfindung sind unter untergeordneten Mengen Mengen zu verstehen, die nicht zu einer Gelierung der Polyester-Polyurethane (A) führen.

Beispiele geeigneter höherfunktioneller Polyisocyanate sind isocyanatgruppenhaltige Polyurethanpräpolymere, die durch Reaktion von Polyolen mit einem Überschuß an Diisocyanaten hergestellt werden können und bevorzugt niederviskos sind. Es können auch Isocyanurat-, Biuret-, Allophanat-, Iminooxadiazindion-, Urethan-, Harnstoff-, Carbodiimid und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden die vorstehend im Detail beschriebenen Diisocyanate verwendet.

Ganz besonders bevorzugt werden Gemische aus Uretdion- und/oder Isocyanuratgruppen und/oder Allophanatgruppen aufweisenden Polyisocyanataddukten auf Basis von Hexamethylendiisocyanat, wie sie durch katalytische Oligomerisierung von Hexamethylendiisocyanat unter Verwendung von geeigneten Katalysatoren entstehen, eingesetzt.

Die Gelierung kann auch durch die Mitverwendung kettenabbrechender Monoisocyanate verhindert werden. Beispiele geeigneter Monoisocyanate sind Hexylisocyanat, Nonylisocyanat, Laurylisocyanat, Stearylisocyanat oder Phenylisocyanat.

Der Einsatz von Polyolen, Polyaminen und Aminoalkoholen führt zur Molekulargewichtserhöhung der Polyurethane (A).

Geeignete Polyole für die Kettenverlängerung sind Polyole mit bis zu 36 Kohlenstoffatomen je Molekül wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythrit, 1,2-Cyclohexandiol, 1,4-Cyclohexandimethanol, Bisphenol A, Bisphenol F, Neopentylglykol, Hydroxypivalinsäure-neopentylglykolester, hydroxyethyliertes oder hydroxypropyliertes Bisphenol A, hydriertes Bisphenol A oder deren Mischungen (vgl. Patentschriften EP-A- 0 339 433, EP-A- 0 436 941, EP-A- 0 517 707).

Beispiele geeigneter Polyamine weisen mindestens zwei primäre und/oder sekundäre Aminogruppen auf. Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenothanolamin. Bevorzugte Diamine sind Hydrazin, Alkyl- oder Cycloalkyldiamine wie Propylendiamin und 1-Amino-3-aminomethyl-3,5,5-trimethylcyclohexan.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, daß keine vernetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen (vgl. die Patentschrift EP-A- 0 089 497).

Beispiele geeigneter Aminoalkohole sind Ethanolamin, Diethanolamin oder Triethanolamin.

Die Polyurethane können endständige und/oder laterale olefinisch ungesättigte Gruppen enthalten. Gruppen dieser Art können beispielsweise mit Hilfe von Verbindungen eingeführt werden, welche mindestens eine isocyanatreaktive Gruppe, insbesondere Hydroxylgruppe, und mindestens eine Vinylgruppe aufweisen. Beispiele geeigneter Verbindungen dieser Art sind Trimethylolpropanmonoallylether oder Trimethylolpropanmono(meth)acrylat.

Die Polyurethane (A) können mit ethylenisch ungesättigten Verbindungen gepfropft werden. Beispiele geeigneter erfindungsgemäß zu verwendender Polyurethane (A), welche als Pfropfmischpolymerisate vorliegen, sind aus den Patentschriften EP-A-0 521 928, EP-A-0 522 420, EP-A-0 522 419 oder EP-A-0 730 613 bekannt.

Die Herstellung der Polyurethane (A) weist keine methodischen Besonderheiten auf, sondern erfolgt nach den üblichen und bekannten Methoden der Polyurethanchemie.

Zur Herstellung des erfindungsgemäßen Hydroprimers werden die Polyurethane mit den vorstehend beschriebenen Neutralisationsmitteln neutralisiert und in Wasser dispergiert, so daß eine Dispersion mit einem Feststoffgehalt von vorzugsweise 10 bis 70, bevorzugt 20 bis 60, besonders bevorzugt 25 bis 50 und insbesondere 30 bis 45 Gew.-%, jeweils bezogen auf die Dispersion, resultiert.

Der weitere wesentliche Bestandteil der Komponente I des erfindungsgemäßen Hydroprimers ist mindestens ein elektrisch leitfähiges Pigment (B). Beispiele geeigneter elektrisch leitfähiger Pigmente (B) sind Metallpigmente, Leitfähigkeitsruße, dotierte Perlglanzpigmente oder leitfähiges Bariumsulfat. Besonders gut geeignete elektrisch leitfähige Pigmente sind die Leitfähigkeitsruße. Ergänzend wird auf Römpp Lexikon Lacke und Druckfarben, Georg Thieme Verlag, Stuttgart, New York, 1998, »Metallpigmente«, S. 381, und »Leitfähige Pigmente«, S. 354, verwiesen.

Der Gehalt des erfindungsgemäßen Hydroprimers an elektrisch leitfähigen Pigmenten (B) kann sehr breit variieren und liegt vorzugsweise bei 0,01 bis 10, bevorzugt 0,1 bis 8, besonders bevorzugt 0,5 bis 7, ganz besonders bevorzugt 0,5 bis 6 und insbesondere 0,5 bis 5 Gew.%, jeweils bezogen auf die Gesamtmenge des erfindungsgemäßen Hydroprimers.

Der erfindungsgemäße Hydroprimer kann lackübliche Additive (C) in wirksamen Mengen enthalten. Beispiele geeigneter Additive (C) sind
- organische und/oder anorganische Pigmente, Korrosionsschutzpigmente und/oder Füllstoffe wie Calciumsulfat, Bariumsulfat, Silikate wie Talk, Bentonit oder Kaolin, Kieselsäuren, Oxide wie Aluminiumhydroxid oder Magnesiumhydroxid, Nanopartikel, organische Füllstoffe wie Textilfasern, Cellulosefasern, Polyethylenfasern oder Holzmehl, Titandioxid, Ruß, Eisenoxid, Zinkphosphat oder Bleisilikat; diese Additive können auch über Pigmentpasten in die erfindungsgemäßen Hydroprimer eingearbeitet werden;
- Radikalfänger;
- organische Korrosionsinhibitoren;
- Katalysatoren für die Vernetzung wie anorganische und organische Salze und Komplexe des Zinns, Bleis, Antimons, Wismuts, Eisens oder Mangans, vorzugsweise organische Salze und Komplexe des Wismuts und des Zinns, insbesondere Wismutlactat, -ethylhexanoat oder - dimethylolpropionat, Dibutylzinnoxid oder Dibutylzinndilaurat ;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenole;
- Netzmittel wie Siloxane, fluorhaltige Verbindungen, Carbonsäurehalbester, Phosphorsäureester, Polyacrylsäuren und deren Copolymere oder Polurethane;
- Haftvermittler;
- Verlaufmittel;
- filmbildende Hilfsmittel wie Cellulose-Derivate;
- Flammschutzmittel;
- niedermolekulare, oligomere und hochmolekulare Reaktivverdünner, die an der thermischen Vernetzung teilnehmen können, insbesondere Polyole wie Tricyclodecandimethanol, dendrimere Polyole, hyperverzweigte Polyester, Polyole auf der Basis von Metatheseoligomeren oder verzweigten Alkanen mit mehr als acht Kohlenstoffatomen im Molekül;
- Antikratermittel;
- wassermischbare organische Lösemittel und/oder
- rheologiesteuernde Additive, wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate, vorzugsweise Smektite, insbesondere Montmorillonite und Hectorite, wie Aluminium-Magnesium-Silikate, Natrium-Magnesium- und Natrium-Magnesium-Fluor-Lithium-Schichtsilikate des Montmorillonit-Typs oder anorganische Schichtsilikate wie Aluminium-Magnesium-Silikate, Natrium-Magnesium- und Natrium-Magnesium-Fluor-Lithium-Schichtsilikate des Montmorillonit-Typs (ergänzend wird auf das Buch von Johan Bielemann »Lackadditive«, Wiley-VCH, Weinheim, New York, 1998, Seiten 17 bis 30, verwiesen); Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte Polyacrylate; oder assoziative Verdickungsmittel auf Polyurethanbasis, wie sie in Römpp Lexikon Lacke und Druckfarben, Georg Thieme Verlag, Stuttgart, New York, 1998, »Verdickungsmittel«, Seiten 599 bis 600, und in dem Lehrbuch »Lackadditive« von Johan Bieleman, Wiley-VCH, Weinheim, New York, 1998, Seiten 51 bis 59 und 65, beschrieben werden;

Weitere Beispiele geeigneter Lackadditive werden in dem Lehrbuch "Lackadditive" von Johan Bieleman, Wiley-VCH, Weinheim, New York, 1998, beschrieben.

Die Komponente II des erfindungsgemäßen Hydroprimers enthält mindestens ein Polyisocyanat oder sie besteht aus mindestens einem Polyisocyanat.

Beispiele geeigneter Polyisocyanate sind die vorstehend beschriebenen.

Bevorzugt werden die Polyisocyanate mit 2,5 bis 6, insbesondere 2,5 bis 5 Isocyanatgruppen pro Molekül verwendet. Vorteilhafterweise sind diese Polyisocyanate flüssig und weisen vorteilhafterweise Viskositäten von 100 bis 10.000, vorzugsweise 100 bis 5000 und - sofern das manuelle Vermischen der Komponenten I und II vorgesehen ist - insbesondere 1000 bis 2000 mPas (bei 23°C) auf. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

In dem erfindungsgemäßen Hydroprimer kann das Verhältnis von Komponente I zu Komponente II sehr breit variieren. Es richtet sich vor allem nach der Konzentration der isocyanatreaktiven Gruppen in der Komponente I, insbesondere in dem Polyurethan (A), insbesondere in dem Polyester-Polyurethan (A), und/oder nach der Vemetzungsdichte, die in der erfindungsgemäßen Hydroprimerlackierung vorliegen sollen. Vorteilhafterweise liegt dieses Verhältnis I : II bei 100 : 1 bis 100: 20, bevorzugt 100 : 2 bis 100 : 15, besonders bevorzugt 100 : 3 bis 100 : 13, ganz besonders bevorzugt 100 : 10 bis 100 : 3,5 und insbesondere 100 : 8 bis 100 : 4.

Der erfindungswesentliche Bestandteil des erfindungsgemäßen Hydroprimers ist mindestens ein aromatisches Lösemittel (D). Das aromatisch Lösemittel oder Lösemittelgemisch ist in der Komponente I oder in der Komponente II enthalten. Es kann aber auch in beiden Komponenten I und II enthalten sein. Welcher Variante jeweils der Vorzug gegeben wird, richtet sich in der Hauptsache danach, in welcher Komponente das aromatische Lösemittel (D) am besten gelöst oder dispergiert werden kann. Der Fachmann kann daher die jeweils günstigste Variante anhand einfacher Vorversuche ermitteln. In den allermeisten Fällen erweist sich die Zugabe des aromatischen Lösemittels (D) zu der Komponente I als besonders vorteilhaft und wird deshalb besonders bevorzugt angewandt.

Als aromatische Lösemittel (D) kommen grundsätzlich alle üblichen und bekannten flüssigen aromatischen Verbindungen in Betracht, die mit den übrigen Bestandteilen des erfindungsgemäßen Hydroprimers, insbesondere den Polyisocyanate, bei den für die Herstellung, die Lagerung, die Applikation und die thermische Härtung der erfindungsgemäßen. Hydroprimer angewandten Temperaturen keine unerwünschten Reaktionen eingehen.

Geeignete aromatische Lösemittel (D) werden ausgewählt aus der Gruppe enthaltend unsubstituierte oder mit Alkyl-, Cycloalkyl-, Perhalogenalkyl-, Perhalogencycloalkyl- Alkyloxy-, Cycloalkoxy- und/oder Perhalogenalkyloxygruppen mono-, di- oder trisubstituierte einkernige oder mehrkernige Aromaten oder Heteroaromaten, wobei die genannten Gruppen auch cyclisch mit dem oder den aromatischen Kernen verknüpft sein können, sowie mit Nitril- und/oder Nitrogruppen und/oder Halogenatomen mono-, di- oder trisubstituierte einkernige oder mehrkernige Aromaten oder Heteroaromaten.

Beispiele geeigneter Alkylgruppen sind Methyl-, Ethyl-, Propyl-, Isopropyl-, n-Butyl-, iso-Butyl- und tert-Butylgruppen.

Beispiele geeigneter Cycloalkylgruppen sind Cyclopentyl- und Cyclohexylgruppen.

Beispiele geeigneter Perhalogenalkylgruppen sind Trifluormethyl-, Pentafluorethyl- und Nonafluorbutylgruppen.

Beispiele geeigneter Alkoxygruppen sind Methoxy-, Ethoxy-, Propyloxy- und Butoxygruppen.

Beispiele geeigneter Cycloalkoxygruppen sind Cyclopentoxy- und Cyclohexoxygruppen.

Beispiele geeigneter Perfluoralkoxygruppen sind Trifluormethoxy-, Pentafluorethoxy- und Nonafluorbutoxygruppen.

Beispiele geeigneter cyclisch verknüpfter Gruppen sind Propan-1,3-diyl-, Butan-1,4-diyl-, 1-Oxabutan-1,4-diyl-, 2-Oxabutan-1,4-diyl- und 1,4-Dioxabutan-1,4-diylgruppen.

Beispiele geeigneter Halogenatome sind Fluor, Chor oder Brom.

Vorzugsweise werden als aromatische Lösemittel (D) einkernige Aromaten und/oder Heteroaromaten verwendet. Besonders bevorzugt handelt es sich bei dem aromatischen Kern um einen Benzolkern und bei dem heteroaromatischen Kern um einen Thiophen-, Pyridin- und/oder Triazinkern. Ganz besonders bevorzugt wird der Benzolkern angewandt.

Beispiele geeigneter aromatischer Lösemittel (D) auf der Basis des Benzolkerns sind Benzol, Toluol, o-, m- und/oder p-Xylol, Mesitylen, Pseudocumol, Hemellitol, Ethylbenzol, Cumol, p-Cymol, tert.-Butylbenzol, Chlorbenzol, o-, m- und/oder p-Dichlorbenzol, Fluorbenzol, o-, m- und/oder p-Difluorbenzol, Perfluorbenzol, Nitrobenzol, Benzonitril, Methoxybenzol, Ethoxybenzol oder Thiophen, von denen die Xylole besonders bevorzugt verwendet werden. Ganz besonders bevorzugt werden technische Gemische der Xylole angewandt, die Spuren von weiteren alkylierten Aromaten enthalten. Die reinen Xylolisomeren, die Isomerengemische und die technischen Gemische werden im Rahmen der vorliegenden Erfindung als "Xylol" bezeichnet.

Der Gehalt des erfindungsgemäßen Hydroprimers an aromatischen Lösemitteln (D) kann in dem in Anspruch 1 angegebenen Bereich variieren. Generell gilt, daß nicht so viel an aromatischen Lösemitteln (D) angewandt werden darf, daß die Kunstsstoffteile in einem unerwünscht hohen Ausmaß angelöst werden. Außerdem darf es nicht zu einer Entmischung oder Phasentrennung im erfindungsgemäßen Hydroprimer und/oder in der Komponente I kommen. Nach unten ist der Anteil an aromatischen Lösemitteln (D) nur dadurch begrenzt, daß so viel an Lösemitteln (D) verwendet werden muß, daß der erfindungsgemäße Effekt eintritt. Es werden 0,25 bis 4 und vorzugsweise 0,3 bis 2 Gew.-%, jeweils bezogen auf den erfindungsgemäßen Hydroprimer, an aromatischen Lösemitteln (D) verwendet.

Die Herstellung des erfindungsgemäßen Hydroprimers weist keine methodischen Besonderheiten auf, sondern erfolgt mit Hilfe üblicher und bekannter Mischverfahren und -vorrichtungen wie Dissolver und/oder Rührwerksmühlen.

Der erfindungsgemäße Hydroprimer dient der Herstellung der erfindungsgemäßen farb-und/oder effektgebenden Mehrschichtlackierungen, wobei insbesondere das erfindungsgemäße Verfahren angewandt wird.

Erfindungsgemäß können mit dem erfindungsgemäßen Hydroprimer insbesondere nach dem erfindungsgemäßen Verfahren alle Kunststoffe bzw. Kunstsstoffteile beschichtet werden, wie sie heutzutage üblicherweise angewandt werden. Beispiele solcher Kunststoffe sind ABS, AMMA, ASA, CA, CAB, EP, UF, CF, MF, MPF, PF, PAN, PA, PE, HDPE, LDPE, LLDPE, UHMWPE, PC, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) sowie deren Polymerblends, insbesondere PPE/PA, PC/PBT oder PC/ABS, und faserverstärkte Kunststoffe auf dieser Basis. Es ist ein besonderer Vorteil des erfindungsgemäßen Hydroprimers und des erfindungsgemäßen Verfahrens, daß die Kunststoffteile nicht mehr zu Zwecken der besseren Haftung des Hydroprimers durch Beflammen oder durch Plasmabehandlung vorbehandelt werden müssen.

Das erfindungsgemäße Verfahren geht aus von der Aplikation des erfindungsgemäßen Hydroprimers auf die Oberfläche des zu beschichtenden Kunstsstoffteils und thermische Härtung der resultierenden Hydroprimerschicht, wodurch die erfindungsgemäße Hydroprimerlackierung resultiert. Vorzugsweise wird in diesem Verfahrenschritt und den nachfolgenden die thermische Härtung bei Temperaturen durchgeführt, bei denen keine Gefahr der Deformation der Kunstsstoffteile besteht. Vorzugsweise werden Temperaturen ≤100°C, insesondere 80 bis 95°C angewandt.

Alternativ erfolgt in dem ersten Verfahrenschritt die Applikation des erfindungsgemäßen Hydroprimers, Trocken der resultierenden elektrisch leitfähigen Hydroprimerschicht, Naß-in-naß-Applikation einer hellen Hydroprimerschicht und gemeinsame thermische Härtung der resultierenden elektrisch leitfähigen Hydroprimerschicht und der hellen Hydroprimerschicht, wodurch die erfindungsgemäße Hydroprimerlackierung und die helle Hydroprimerlackierung resultieren.

Beispiele geeigneter erfindungsgemäß zu verwendender heller Hydroprimer sind ebenfalls Zweikomponentensysteme. Ihre Komponente I enthält mindestens ein in Wasser gelöstes oder dispergiertes hydroxylgruppenhaltiges Bindemittel und mindestens ein helles Pigment, und ihre Komponente II enthält mindestens ein Polyisocyanat. Als hydroxylgruppenhaltige Bindemittel kommen Polyester, Polyacrylate, Polyurethane, acrylierte Polyester und/oder acrylierte Polyurethane, insbesondere Polyurethane, in Betracht. Beispiele geeigneter Polyurethane sind die vorstehend beschriebenen Polyurethane (A). Beispiele geeigneter heller Pigmente sind die vorstehend beschriebenen Pigmente (B) und (C) sowie die nachstehend beschriebenen Pigmente, sofern sie hell und deckend sind. Als Komponenten II kommen die vorstehend beschriebenen Komponenten II in Betracht. Diese Variante des erfindungsgemäßen Verfahrens wird dann angewandt, wenn eine Farbtonanpassung zwischen der dunklen erfindungsgemäßen Hydroprimerlackierung und der hellen Decklackierung oder Basislackierung erfolgen muß.

Im zweiten Verfahrenschritt des erfindungsgemäßen Verfahrens erfolgt die Applikation eines Unidecklacks und thermische Härtung der resultierenden Unidecklackschicht, wodurch eine Unidecklackierung resultiert.

Alternativ hierzu erfolgt im zweiten Verfahrenschritt die Applikation eines Wasserbasislacks und Antrocknen der resultierenden Wasserbasislackschicht und im dritten Verfahrenschritt die Applikation eines Klarlacks (Naß-in-naß-Verfahren) und die gemeinsame thermische Härtung oder thermische Härtung und Härtung mit aktinischem Licht (Dual Cure) der resultierenden Klarlackschicht und der Wasserbasislackschicht, wodurch die Basislackierung und die Klarlackierung resultieren.

Im Rahmen des erfindungsgemäßen Verfahrens kann die Klarlackierung noch mit einem weiteren Klarlack beschichtet und die resultierende Klarlackschicht thermisch und/oder mit aktinischer Strahlung gehärtet werden, wodurch eine hochkratzfeste Klarlackierung (Sealer) resultiert.

Geeignete Wasserbasislacke enthalten mindestens ein in Wasser gelöstes oder dispergiertes hydroxylgruppenhaltiges Bindemittel und mindestens ein farb-und/oder effektgebendes Pigment. Darüber hinaus können sie die vorstehend beschriebenen lacküblichen Additive (C) sowie übliche Vernetzungsmittel in den bekannten wirksamen Mengen enthalten.

Geeignete Unidecklacke enthalten ebenfalls mindestens ein hydroxylgruppenhaltiges Bindemittel und mindestens ein farb- und/oder effektgebendes Pigment. Darüber hinaus können auch sie die vorstehend beschriebenen lacküblichen Additive (C) sowie übliche Vernetzungsmittel in den bekannten wirksamen Mengen enthalten.

Im Rahmen des erfindungsgemäßen Verfahrens werden vorzugsweise Wasserbasislacke angewandt.

Beispiele geeigneter hydroxylgruppenhaltiger Bindemittel sind Polyurethane und/oder acrylierte Polyurethane, insbesondere die vorstehend beschriebenen Polyurethane (A).

Darüber hinaus kann der Wasserbasislack noch mindestens ein hydroxylgruppenhaltiges Polyacrylat, einen hydroxylgruppenhaltigen Polyester und/oder einen hydroxylgruppenhaltigen acrylierten Polyester als zusätzliche(s) Bindemittel enthalten.

Geeignete farb- und/oder effektgebender Pigmente können aus anorganischen oder organischen Verbindungen hergestellt werden. Der erfindungsgemäß zu verwendende Wasserbasislack gewährleistet daher aufgrund dieser Vielzahl geeigneter Pigmente eine universelle Einsatzbreite und ermöglicht die Realisierung einer Vielzahl von Farbtönen und optischer Effekte.

Als Effektpigmente können Metallplättchenpigmente wie handelsübliche Aluminiumbronzen, gemäß DE-A-36 36 183 chromatierte Aluminiumbronzen, handelsübliche Edelstahlbronzen und nichtmetallische Effektpigmente, wie zum Beispiel Perlglanz- bzw. Interferenzpigmente, eingesetzt werden. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen.

Beispiele für geeignete anorganische farbgebende Pigmente sind Titandioxid, Eisenoxide, Sicotransgelb und Ruß. Beispiele für geeignete organische farbgebende Pigmente sind Thioindigopigmente Indanthrenblau, Cromophthalrot, Irgazinorange und Heliogengrün. Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentsvolumenkonzentration«, Seite 563 »Thioindigo-Pigmente« und Seite 567 »Titandioxid-Pigmente« verwiesen.

Der Anteil der Pigmente an dem Wasserbasislack und dem Unidecklack kann außerordentlich breit variieren und richtet sich vor allem nach der Deckkraft der Pigmente, dem gewünschten Farbton und dem gewünschten optischen Effekt. Vorzugsweise sind die Pigmente in dem erfindungsgemäßen Wasserbasislack in einer Menge von 0,5 bis 50, bevorzugt 0,5 bis 45, besonders bevorzugt 0,5 bis 40, ganz besonders bevorzugt 0,5 bis 35 und insbesondere 0,5 bis 30 Gew.-%, jeweils bezogenen auf das Gesamtgewicht des Wasserbasislacks, enthalten. Dabei kann auch das Pigment/Bindemittel Verhältnis, d. h. das Verhältnis der Pigmente zu den Polyurethanen sowie sonstigen gegebenenfalls vorhandenen Bindemitteln, außerordentlich breit variieren. Vorzugsweise liegt dieses Verhältnis bei 6,0 : 1,0 bis 1,0 : 50, bevorzugt 5 : 1,0 bis 1,0 : 50, besonders bevorzugt 4,5 : 1,0 bis 1,0 : 40, ganz besonders bevorzugt 4 : 1,0 bis 1,0 : 30 und insbesondere 3,5 : 1,0 bis 1,0 : 25.

Diese Pigmente können auch über Pigmentpasten in die erfindungsgemäßen Wasserbasislacke eingearbeitet werden, wobei als Reibharze u.a. die Polyurethane (A) in Betracht kommen.

Für die Herstellung der Polyurethane kommen die vorstehend bei der Herstellung der Hydroprimer beschriebenen Ausgangsverbindungen in Betracht.

Beispiele geeigneter Vernetzungsmittel sind Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestern und Polyisocyanaten oder von Estern und Teilestern mehrwertiger Alkohole der Malonsäure mit Monoisocyanaten, wie sie der europäischen Patentschrift EP-A-0 596 460 beschrieben werden.

Beispiele gut geeigneter Wasserbasislacke sowie die entsprechenden Lackierungen sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747, EP-A-0 401 565, EP-B-0 730 613 oder WO 95/14721 bekannt.

Besondere Vorteile bieten physikalisch härtende Wasserbasislacke, weswegen sie erfindungsgemäß bevorzugt angewendet werden.

Beispiele geeigneter Klarlacke sind Zweikomponentenklarlacke. Bekanntermaßen enthalten die Zweikomponentenklarlacke eine Komponente I mit mindestens einem hydroxylgruppenhaltigen Bindemittel und eine Komponente II mit mindestens einem Polyisocyanat. Die Komponenten I und II werden bis zu ihrer gemeinsamen Verwendung getrennt voneinander gelagert.

Beispiele geeigneter Polyisocyanate sind die vorstehend beschriebenen.

Beispiele geeigneter hydroxylgruppenhaltiger Bindemittel sind oligomere oder polymere, statistisch, alternierend und/oder blockartig aufgebaute lineare und/oder verzweigte und/oder kammartig aufgebaute (Co)Polymerisate von ethylenisch ungesättigten Monomeren oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele gut geeigneter (Co)Polymerisate sind Poly(meth)acrylate und partiell verseifte Polyvinylester.

Beispiele gut geeigneter Polyadditionsharze und/oder Polykondensationsharze sind Polyester, Alkyde, Polyurethane, Polylactone, Polycarbonate, Polyether, Epoxidharz-Amin-Addukte, Polyharnstoffe, Polyamide oder Polyimide.

Die erfindungsgemäß zu verwendenden Hydroxylgruppen enthaltenden Bindemittel oder Harze sind Oligomere und Polymere. Im Rahmen der vorliegenden Erfindung werden unter Oligomeren Harze verstanden, die mindestens 2 bis 15 wiederkehrende Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Die erfindungsgemäß zu verwendenden Hydroxylgruppen enthaltenden Harze enthalten primäre und/oder sekundäre Hydroxylgruppen. Es ist ein ganz wesentlicher Vorteil des erfindungsgemäßen Verfahrens, daß beide Arten von Hydroxylgruppen verwendet werden können. Dies ermöglicht es, die Reaktivität der Harze über sterische Effekte gezielt zu steuern.

Die OH-Zahl der erfindungsgemäß zu verwendenden Hydroxylgruppen enthaltenden Harze kann sehr breit variieren und liegt vorzugsweise bei 10 bis 500, bevorzugt 20 bis 400 und insbesondere 30 bis 350 mg KOH/g.

Das Harz kann des weiteren mindestens eine funktionelle Gruppe enthalten, die beim Bestrahlen mit aktinischer Strahlung mit einer Gruppe ihrer Art oder einer anderen funktionellen Gruppe reagiert. Diese funktionellen Gruppen können bereits in den erfindungsgemäß zu verwendenden Hydroxylgruppen enthaltenden Harzen vorhanden sein oder nachträglich in die Harze durch polymeranaloge Reaktionen, eingeführt werden.

Beispiele geeigneter funktioneller Gruppen dieser Art sind Allyl-, Vinyl- Acrylat- oder Methacrylatgruppen, insbesondere Acrylatgruppen. Bei der aktinischen Strahlung kann es sich um elektromagnetische Strahlung wie Röntgenstrahlung, UV-Strahlung, sichtbares Licht oder nahes IR-Licht (NIR) oder um Korpuskularstrahlung wie Elektronenstrahlen handeln.

Von den vorstehend beschriebenen Hydroxylgruppen enthaltenden Bindemitteln werden die Poly(meth)acrylate, die Polyester und die Polyurethane bevorzugt verwendet. Besondere Vorteile resultieren aus der gemeinsamen Verwendung der Poly(meth)acrylate und der Polyester.

Außer dem Bindemittel und den Polyisocyanaten können die erfindungsgemäß zu verwendenden Zweikomponentenklarlacke noch die vorstehend beschriebenen lacküblichen Additive in den bekannten wirksamen Mengen enthalten. Es versteht sich von selbst, daß hierbei nur solche Additive angewandt werden, die die Transparenz der Klarlackierung nicht beeinträchtigen. Weitere Beispiele geeigneter Additive für Klarlacke sind
- Katalysatoren für die Vernetzung wie Dibutylzinndilaurat, Lithiumdecanoat oder Zinkoctoat;
- transparente Füllstoffe auf der Basis von Siliziumdioxid, Aluminiumoxid, Titandioxid oder Zirkoniumoxid; ergänzend wird noch auf das Römpp Lexikon Lacke und Druckfarben, Georg Thieme Verlag, Stuttgart, 1998, Seiten 250 bis 252, verwiesen;
- Sag control agents wie Harnstoffe, modifizierte Harnstoffe und/oder Kieselsäuren, wie sie beispielsweise in den Literaturstellen EP-A-192 304, DE-A-23 59 923, DE-A-18 05 693, WO 94/22968, DE-C-27 51 761, WO 97/12945 oder "farbe+ lack", 11/1992, Seiten 829 ff., beschrieben werden; und/oder
- Mattierungsmittel wie Magnesiumstearat.

Beispiele geeigneter Klarlacke für die Herstellung hochkratzfester Klarlackierungen sind organisch modifizierte Keramikmaterialien, welche auch unter der Marke ORMOCER® vertrieben werden.

Im Rahmen des erfindungsgemäßen Verfahrens kann die Applikation der vorstehend beschriebenen Beschichtungsstoffe durch alle üblichen Applikationsmethoden, wie z.B. Spritzen, Rakeln, Streichen, Gießen, Tauchen, Tränken, Träufeln oder Walzen erfolgen. Dabei kann das zu beschichtende Kunstsstoffteil als solches ruhen, wobei die Applikationseinrichtung oder -anlage bewegt wird. Indes kann auch das zu beschichtende Kunstsstoffteil bewegt werden, wobei die Applikationsanlage relativ zum Substrat ruht oder in geeigneter Weise bewegt wird. Welche Methode angewandt wird, richtet sich in erster Linie nach der Größe des Substrats. So wird man ein großes Kunstsstoffteil in erster Linie mit Hilfe beweglicher Applikationseinrichtungen beschichten.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Sofern der Klarlack Bestandteile enthält, die mit aktinischer Strahlung vernetztbar sind, wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Beschichtungsstoffs und des Overspray vermieden.

Im allgemeinen werden die elektrisch leitfähige Hydroprimerschicht sowie die helle Hydroprimerschicht, die Unidecklackschicht, die Basislackschicht und die Klarlackschicht in einer Naßschichtdicke appliziert, daß nach ihrer Aushärtung Schichten mit der für ihre Funktionen notwendigen und vorteilhaften Schichtdicken resultieren. Im Falle der erfindungsgemäßen Hydroprimerlackierung liegt diese Schichtdicke bei 5 bis 100, vorzugsweise 10 bis 80, besonders bevorzugt 10 bis 60 und insbesondere 10 bis 40 µm, im Falle der hellen Hydroprimerschicht liegt diese Schichtdicke bei bei 5 bis 100, vorzugsweise 10 bis 80, besonders bevorzugt 10 bis 60 und insbesondere 10 bis 40 µm, im Falle der Decklackierung liegt sie bei 5 bis 90, vorzugsweise 10 bis 80, besonders bevorzugt 15 bis 60 und insbesondere 20 bis 50 µm, im Falle der Basislackierung liegt sie bei 5 bis 50, vorzugsweise 10 bis 40, besonders bevorzugt 12 bis 30 und insbesondere 15 bis 25 µm, und im Falle der Klarlackierung liegt sie bei 10 bis 100, vorzugsweise 15 bis 80, besonders bevorzugt 20 bis 70 und insbesondere 25 bis 60 µm.

Die thermische Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10g Wasser/kg Luft, insbesondere < 5g Wasser/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100 °C, besonders bevorzugt 80 bis 100 °C und insbesondere 85 bis 100 °C während einer Zeit von 1 min bis zu 2 h, besonders bevorzugt 2 min bis zu 1 h und insbesondere 3 min bis 45 min.

Die thermische Härtung kann bei entsprechender stofflicher Zusammensetzung des Beschichtungsstoffs durch die Härtung mit aktinischer Strahlung ergänzt werden, wobei insbesondere UV-Strahlung und/oder Elektronenstrahlen verwendet werden können. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschicht gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken können die nicht direkter Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten ausgehärtet werden.

Die Anlagen und Bedingungen dieser Härtungsmethoden werden beispielsweise in R. Holmes, »U.V. and E.B. Curing Formulations for Printing Inks«, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt (Dual Cure), können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für jeden Einzelfall besonders gut geeignet ist aufgrund seines allgemeinen Fachwissens gegebenenfalls unter Zuhilfenahme einfacher Vorversuche ermitteln.

Die insbesondere nach dem erfindungsgemäßen Verfahren erhaltene erfindungsgemäße farb- und/oder effektgebende Mehrschichtlackierung enthält die in der folgenden Reihenfolge übereinanderliegenden Schichten:
1a) eine erfindungsgemäße Hydroprimerlackierung oder alternativ
1a) eine erfindungsgemäße Hydroprimerlackierung und
1b) eine helle Hydroprimerlackierung sowie
2a) eine Unidecklackierung oder alternativ
2b) eine Basislackierung und
3) eine Klarlackierung sowie gegebenenfalls
4) eine hochkratzfeste Klarlackierung (Sealer).

Die erfindungsgemäßen farb- und/oder effektgebenden Mehrschichtlackierungen weisen ein hervorragendes Eigenschaftsprofil auf, das hinsichtlich der Mechanik, Optik, Korrosionsbeständigkeit und Haftung auch bei sehr tiefen Temperaturen und/oder nach Schwitzwasserbelastung sehr gut ausgewogen ist. So haben die erfindungsgemäßen Mehrschichtlackierungen die vom Markt geforderte hohe optische Qualität und Zwischenschichthaftung auch im Dampfstrahltest und werfen keine Probleme wie mangelnde Schwitzwasserbeständigkeit, Rißbildung (mudcracking), Verlaufsstörungen oder Oberflächenstrukturen auf.

Insbesondere weist die erfindungsgemäße Mehrschichtlackierung einen hervorragenden Metallic-Effekt, einen hervorragenden D.O.I. (distinctiveness of the reflected image) und eine hervorragende Oberflächenglätte, auf. Sie ist witterungsstabil, resistent gegenüber Chemikalien und Vogelkot und kratzfest und zeigt ein sehr gutes Reflow-Verhalten.

Ein weiterer wesentlicher Vorteil ist die sehr gute Überlackierbarkeit der erfindungsgemäßen Mehrschichtlackierung auch ohne Anschleifen. Dadurch kann sie leicht mit üblichen und bekannten hochkratzfesten Beschichtungsstoffen auf der Basis organisch modifizierter Keramikmaterialien beschichtet werden.

Nicht zuletzt erweist es sich aber als ganz besonderer Vorteil, daß mit Hilfe des erfindungsgemäßen Verfahrens eine Mehrschichtlackierung realisiert werden kann, welche überwiegend auf wäßrigen Beschichtungsstoffen basiert.

Demzufolge weisen auch die erfindungsgemäßen Kunstsstoffteile auch eine längere Gebrauchsdauer, einen besseren ästhetischen Eindruck beim Betrachter und eine bessere technologische Verwertbarkeit auf, was sie wirtschaftlich besonders attraktiv macht.

### Beispiel

### Die Herstellung eines erfindungsgemäßen Hydroprimers und seine Verwendung zur Herstellung einer erfindungsgemäßen farb- und effektgebenden Mehrschichtlackierung

Für die Herstellung der erfindungsgemäßen Mehrschichtlackierung wurde zunächst die Komponente I des erfindungsgemäßen Hydroprimers wie folgt hergestellt:

In einem Dissolver wurden 32 Gewichtsteile einer handelsüblichen Polyester-Polyurethan-Dispersion, 1,7 Gewichtsteile Aerosil, 1,3 Gewichtsteile eines handelsüblichen elektrisch leitfähigen Rußes, 6,0 Gewichtsteile einer handelsüblichen 3%igen Bentonepaste, 1,5 Gewichtsteile Butylglykol, 1,5 Gewichtsteile einer 52 %igen Netzmittellösung, 23 Gewichtsteile Titandioxid, 13 Gewichtsteile Bariumsulfat, 3,7 Gewichtsteile Talkum und 1,1 Gewichtsteile eines handelsüblichen Emulgators während 20 Minuten und bis zu einer Temperatur von 60°C miteinander vermischt. Hiernach wurde die resultierende Mischung in einer Rührwerksmühle (ZWM-Mühle) bis zu einer Kornfeinheit von 12 bis 14µm (Hegman Keil 25) gemahlen. Anschließend wurden 10,2 Gewichtsteile Wasser und ein Gewichtsteil Xylol zugegeben, wodurch die erfindungsgemäß zu verwendende Komponente I resultierte.

Die Komponente I wurde kurz vor der Applikation mit einem handelsüblichen cycloaliphatischen Polyisocyanat (Desmodur® N 3400 von der Firma Bayer AG) (Komponente II) im Gewichtsverhältnis I : II = 100 : 6 vermischt, wonach der resultierende erfindungsgemäße Hydroprimer durch pneumatische Spritzapplikation in einer Trockenfilmschichtdicke von 20 bis 25µm auf Kunststofftafeln aus Noryl® GTX 964 (handelsüblicher Blend aus Polyphenylenoxid und Polyamid) appliziert wurde. Die resultierende Hydroprimerschicht wurde während 10 Minuten bei Raumtemperatur abgelüftet und während 30 Minuten bei 90°C Objekttemperatur gehärtet.

Anschließend wurde die resultierende erfindungsgemäße Hydroprimerlackierung mit einem handelsüblichen Wasserbasislack beschichtet, wonach die resultierende Wasserbasislackschicht während 10 Minuten bei Raumtemperatur abgelüftet wurde. Hiernach wurde sie nach dem Naß-in-naß-Verfahren mit einem handelsüblichen Zweikomponentenklarlack beschichtet, wonach die Wasserbasislackschicht und die Klarlackschicht während 30 Minuten bei 90°C Objekttemperatur gemeinsam gehärtet wurden.

Nach einer zweitägigen Alterung der Tafeln bei 60°C wurden sie der bekannten Dampfstrahlprüfung nach DaimlerChrysler unterzogen. Hierbei kam es zu keinerlei Abplatzungen, was die hervorragende Haftung des erfindungsgemäßen Hydroprimers zu den Kunstsstoffteilen einerseits und zu der Wasserbasislackierung andererseits untermauerte.

### Vergleichsversuch

### Die Herstellung eines nicht erfindungsgemäßen Hydroprimers und seine Verwendung zur Herstellung einer herkömmlichen farb- und effektgebenden Mehrschichtlackierung

Das Beispiel wurde wiederholt, nur daß dem Hydroprimer kein Xylol zugesetzt wurde. Im Gegensatz zum Beispiel kam es bei dem Vergleichsversuch bei der Dampfstrahlprüfung nach DaimlerChrysler zu starken Abplatzungen.

## Patentansprüche

1. Elektrisch leitfähiger Hydroprimer für Kunststoffe, enthaltend
I) mindestens eine Komponente, enthaltend,
A) mindstens eine wäßrige Polyurethandispersion und
B) mindestens ein elektrisch leitfähiges Pigment; und
II) mindestens eine Komponente enthaltend mindestens ein Polyisocyanat,
**dadurch gekennzeichnet, daß** mindestens eine der Komponenten I und/oder II mindestens ein aromatisches Lösemittel (D) in einer Menge von 0,25 bis 4 Gew.-%, bezogen auf die Gesamtmenge des Hydroprimers enthält

2. Der Hydroprimer nach Anspruch 1, **dadurch gekennzeichnet, daß** das aromatische Lösemittel (D) ausgewählt wird aus der Gruppe enthaltend unsubstituierte oder mit Alkyl-, Cycloalkyl-, Perhalogenalkyl-, Perhalogencycloalkyl- Alkyloxy-, Cycloalkoxy- und/oder Perhalogenalkyloxygruppen mono-, di- oder trisubstituierte einkernige oder mehrkernige Aromaten oder Heteroaromaten, wobei die genannten Gruppen auch cyclisch mit dem oder den aromatischen Kernen verknüpft sein können, sowie mit Nitril- und/oder Nitrogruppen und/oder Halogenatomen mono-, di- oder trisubstituierte einkernige oder mehrkernige Aromaten oder Heteroaromaten.

3. Der Hydroprimer nach einem der Ansprüche 1 oder 2, **dadurch gekennzeichnet, daß** einkernige Aromaten und/oder Heteroaromaten verwendet werden.

4. Der Hydroprimer nach Anspruch 2 oder 3, **dadurch gekennzeichnet, daß** man Benzol, Toluol, o-, m- und/oder p-Xylol, Mesitylen, Pseudocumol, Hemellitol, Ethylbenzol, Cumol, p-Cymol, tert.-Butylbenzol, Chlorbenzol, o-, m- und/oder p-Dichlorbenzol, Fluorbenzol, o-, m- und/oder p-Difluorbenzol, Perfluorbenzol, Nitrobenzol, Benzonitril, Methoxybenzol, Ethoxybenzol oder Thiophen verwendet.

5. Der Hydroprimer nach einem der Ansprüche 1 bis 4, **dadurch gekennzeichnet, daß** die Polyurethandispersion (A) mindestens ein Polyester-Polyurethan (A) mit (potentiell) kationischen funktionellen Gruppen (a11) oder (potentiell) anionischen funktionellen Gruppen (a12) und/oder nichtionischen funktionellen Gruppen (a13) auf der Basis von Polyalkylenethern enthält.

6. Der Hydroprimer nach Anspruch 5, **dadurch gekennzeichnet, daß** es sich bei den potentiell kationischen funktionellen Gruppen (a11) um primäre, sekundäre oder tertiäre Aminogruppen, sekundäre Sulfidgruppen oder tertiäre Phoshingruppen, den kationischen funktionellen Gruppen (a11) um sekundäre, tertiäre oder quaternäre Ammoniumgruppen, tertiäre Sulfoniumgruppen oder quaternäre Phosphoniumgruppen, den potentiell anionischen funktionellen. Gruppen (a12) um Carbonsäure-, Sulfonsäure- oder Phosphonsäuregruppen und den anionischen funktionellen Gruppen (a12) um Carboxylat-, Sulfonat- oder Phosphonatgruppen handelt.

7. Der Hydroprimer nach einem der Ansprüche 1 bis 6, **dadurch gekennzeichnet, daß** das Polyester-Polyurethan (A) herstellbar ist durch die Umsetzung von
- Polyesterpolyolen und
- Verbindungen, durch welche die stabilisierenden (potentiell) ionischen Gruppen (a11) oder (a12) und/oder die nichtionischen funktionellen Gruppen (a13) eingeführt werden, sowie gegebenenfalls
- Polyaminen und
- Aminolakoholen
mit Polyisocyanaten.

8. Der Hydroprimer nach einem der Ansprüche 1 bis 6, **dadurch gekennzeichnet, daß** die Polyesterpolyole erhältlich sind durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen.

9. Der Hydroprimer nach einem der Ansprüche 1 bis 8; **dadurch gekennzeichnet, daß** als elektrisch leitfähige Pigmente (B) Metallpigmente, Leitfähigkeitsruße, dotierte Periglanzpigmente oder leitfähiges Banumsulfat, insbesondere Leitfähigkeitsruße, verwendet werden.

10. Der Hydroprimer nach einem der Ansprüche 1 bis 9, **dadurch gekennzeichnet; daß** er elektrisch nicht leitfähige Pigmente und/oder Lackadditive (C) enthält.

11. Der Hydroprimer nach einem der Ansprüche 1 bis 10, **dadurch gekennzeichnet, daß** er einen Festkörpergehalt von 30 bis 80 Gew.-%, bezogen auf den Hydroprimer, aufweist.

12. Verwendung des Hydroprimers gemäß einem der Ansprüche 1 bis 11 für die Herstellung farb- und/oder effektgebender Mehrschichtlackierungen.

13. Verfahren zur Herstellung farb- und/oder effektgebender Mehrschichtlackierungen auf Kuststoffteilen durch
1a) Applikation des elektrisch leitfähigen Hydroprimers gemäß einem der Ansprüche 1 bis 11 und thermische Härtung der resultierenden Hydroprimeschicht, wodurch die elektrisch leitfähige Hydroprimerlacklerung resultiert; oder alternativ
1b) Applikation des elektrisch leitfähigen Hydroprimers gemäß einem der Ansprüche 1 bis 11, Trocken der resultierenden elektrisch leitfähigen Hydroprimerschicht; Applikation einer hellen Hydroprimerschicht und gemeinsame thermische Härtung der resultierenden elektrisch leitfähigen Hydroprimerschicht und der hellen Hydroprimerschicht, wodurch die elektrisch leitfähige Hydroprimerlackierung und die helle Hydroprimerlackierung resultiert; und
2a) Applikation eines Unidecklacks und thermische Härtung der resultierenden Unidecklackschicht, wodurch eine Unidecklackierung resultiert; oder alternativ
2b) Applikation eines Wasserbasislacks und Antrocknen der resultierenden Wasserbasislackschicht und
3) Applikation eines Klarlacks und gemeinsame thermische Härtung oder thermische Härtung und Härtung mit aktinischem Licht der resultierenden Klarlackschicht und der Wasserbasislackschicht, wodurch die Basislackierung und die Klarlackierung resultieren.

14. Das Verfahren nach Anspruch 13, **dadurch gekennzeichnet, daß** man
4) die Klarlackierung (3) mit einem weiteren Klarlack beschichtet und die resultierende Klarlackschicht thermisch und/oder mit aktinischer Strahlung härtet, wodurch eine hochkratzfeste Klarlackierung (Sealer) resultiert.

15. Farb- und oder effektgebende. Mehrschichtlackierung für Kunststoffteile, die die folgenden Schichten in der angegebenen Reihenfolge übereinanderliegend enthält:
1a) eine elektrisch leitfähige Hydroprimerlackierung oder alternativ
1a) eine elektrisch leitfähige Hydroprimerlackierung und
1b) eine helle Hydroprimerlackierung sowie
2a) eine Unidecklackierung oder alternativ
2b) eine Basislackierung und
3) eine Klarlackierung.
**dadurch gekennzeichnet, daß** ein Hydroprimer gemäß einem der Ansprüche 1 bis 11 eingesetzt wird.

16. Die farb- und/oder effektgebende Mehrschichtlackierung nach Anspruch 15, **dadurch gekennzeichnet, daß** die Klarlackierung (3) mit einem Sealer (4) beschichtet ist.

17. Kunststoffteile, beschichtet mit mindestens einer farb- und/oder effektgebenden Mehrschichtlacklerung gemäß Anspruch 15 oder 16 und/oder mindestens einer färb- und/oder effektgebenden Mehrschichtlackierung, herstellbar gemäß Anspruch 13 oder 14.

18. Verwendung der Kunststoffteile gemäß Anspruch 17 für die Herstellung von Karosserien für PKW und für Kabinen von Nutzfahrzeugen.

## Claims

1. Electrically conductive hydroprimer for plastics, comprising
I) at least one component comprising
A) at least one aqueous polyurethane dispersion and
B) at least one electrically conductive pigment; and
II) at least one component comprising at least one polyisocyanate,
**characterized in that** at least one of the components I and II comprises at least one aromatic solvent (D) in an amount of from 0.25 to 4% by weight, based on the total amount of the hydroprimer.

2. Hydroprimer according to Claim 1 or 2, **characterized in that** the aromatic solvent (D) is selected from the group consisting of mononuclear or polynuclear aromatics or heteroaromatics which are unsubstituted or are mono-, di- or trisubstituted by alkyl, cycloalkyl, perhaloalkyl, perhalocycloalkyl alkyloxy, cycloalkoxy and/or perhaloalkyloxy groups, it also being possible for said groups to be linked cyclically to the aromatic nucleus or nuclei, and also mononuclear or polynuclear aromatics or heteroaromatics which are mono-, di- or trisubstituted by nitrile and/or nitro groups and/or halogen atoms.

3. Hydroprimer according to either of Claims 1 and 2, **characterized in that** mononuclear aromatics and/or heteroaromatics are used.

4. Hydroprimer according to Claim 2 or 3, **characterized in that** benzene, toluene, o-, m-and/or p-xylene, mesitylene, pseudocumene, hemellitene, ethylbenzene, cumene, p-cymene, tert-butylbenzene, chlorobenzene, o-, m- and/or p-dichlorobenzene, fluorobenzene, o-, m- and/or p-difluorobenzene, perfluorobenzene, nitrobenzene, benzonitrile, methoxybenzene, ethoxybenzene or thiophene is used.

5. Hydroprimer according to any of Claims 1 to 4, **characterized in that** the polyurethane dispersion (A) comprises at least one polyester-polyurethane (A) containing (potentially) cationic functional groups (a11) or (potentially) anionic functional groups (a12) and/or nonionic functional groups (a13) on the basis of polyalkylene ethers.

6. Hydroprimer according to Claim 5, **characterized in that** the potentially cationic functional groups (a11) are primary, secondary or tertiary amino groups, secondary sulfide groups or tertiary phosphine groups, the cationic functional groups (a11) are secondary, tertiary or quaternary ammonium groups, tertiary sulfonium groups or quaternary phosphonium groups, the potentially anionic functional groups (a12) are carboxylic acid, sulfonic acid or phosphonic acid groups, and the anionic functional groups (a12) are carboxylate, sulfonate or phosphonate groups.

7. Hydroprimer according to any of Claims 1 to 6, **characterized in that** the polyester-polyurethane (A) is preparable by reacting
- polyesterpolyols and
- compounds which introduce the stabilizing (potentially) ionic groups (a11) or (a12) and/or the nonionic functional groups (a13), and if desired
- polyamines and
- amino alcohols
with polyisocyanates.

8. Hydroprimer according to any of Claims 1 to 6, **characterized in that** the polyesterpolyols are obtainable by reacting
- unsulfonated or sulfonated saturated and/or unsaturated polycarboxylic acids or their esterifiable derivatives, together if desired with monocarboxylic acids, and
- saturated and/or unsaturated polyols, together if desired with monools.

9. Hydroprimer according to any of Claims 1 to /8, **characterized in that** metal pigments, conductivity blacks, doped pearlescent pigments or conductive barium sulfate, especially conductivity blacks, are used as electrically conductive pigments (B).

10. Hydroprimer according to any of Claims 1 to 9, **characterized in that** it comprises electrically nonconductive pigments and/or coatings additives (C).

11. Hydroprimer according to any of Claims 1 to 10, **characterized in that** it has a solids content of from 30 to 80% by weight, based on the hydroprimer.

12. Use of the hydroprimer according to any of Claims 1 to 11 for producing multicoat color and/or effect paint systems.

13. Process for producing multicoat color and/or effect paint systems on plastics parts by
1a) applying the hydroprimer according to any of Claims 1 to 11 and heat curing the resultant hydroprimer film to give the electrically conductive hydroprimer coating; or alternatively
1b) applying the hydroprimer according to any of Claims 1 to 11, drying the resultant electrically conductive hydroprimer film, applying a light-colored hydroprimer film, and jointly heat curing the resultant electrically conductive hydroprimer film and the light-colored hydroprimer film, to give the electrically conductive hydroprimer coat and the light-colored hydroprimer coat; and
2a) applying a solid-color topcoat material and heat curing the resultant solid-color topcoat film to give a solid-color topcoat; or alternatively
2b) applying an aqueous basecoat material and partially drying the resultant aqueous basecoat film, and
3) applying a clearcoat material and subjecting the resultant clearcoat film and the aqueous basecoat film to a joint heat cure or a heat cure and a cure with actinic light, to give the basecoat and the clearcoat.

14. Process according to Claim 13, **characterized in that**
4) the clearcoat (3) is coated with a further clearcoat material and the resultant clearcoat film is cured by heat and/or actinic radiation to give a highly mar resistant clearcoat (sealer).

15. Multicoat color and or effect paint system for plastics parts, which comprises the following coats atop one another in the stated sequence:
1a) an electrically conductive hydroprimer coating or alternatively
1a) an electrically conductive hydroprimer coating and
1b) a light-colored hydroprimer coating, and
2a) a solid-color topcoat or alternatively
2b) a basecoat, and
3) a clearcoat,
**characterized in that** a hydroprimer according to any of Claims 1 to 11 is used.

16. Multicoat color and/or effect paint system according to Claim 15, **characterized in that** the clearcoat (3) has been coated with a sealer (4).

17. Plastics parts coated with at least one multicoat color and/or effect paint system according to Claim 15 or 16 and/or at least one multicoat color and/or effect paint system producible according to Claim 13 or 14.

18. Use of the plastics parts according to Claim 17 for producing bodies for automobiles and for cabs of commercial vehicles.

## Revendications

1. Hydroprimer électriquement conducteur pour plastiques contenant :
I. au moins un composant contenant :
A) au moins une dispersion aqueuse de polyuréthanne et
B) au moins un pigment électriquement conducteur; et
II. au moins un composant contenant au moins un polyisocyanate,
**caractérisé en ce qu'**au moins un des composants I et/ou II contient au moins un solvant (D) aromatique dans une quantité de 0,25 à 4 % en poids par rapport à la quantité totale de l'hydroprimer.

2. Hydroprimer selon la revendication 1, **caractérisé en ce que** le solvant aromatique (D) est sélectionné dans le groupe contenant des aromatiques ou hétéroaromatiques monovalents ou polyvalents non substitués ou mono-, di- ou trisubstitués avec des groupes alkyle, cycloalkyle, perhalogénoalkyle, perhalogénocycloalkyle, alkyloxy-, cycloalkyloxy- et/ou perhalogénoalkyloxy, lesdits groupes pouvant aussi être liés cycliquement avec le ou les noyaux aromatiques ainsi que les aromatiques ou hétéroaromatiques mono- ou polyvalents mono-, di- ou trisubstitués avec des groupes nitrile et/ou nitro et/ou des atomes d'halogène.

3. Hydroprimer selon l'une des revendications 1 ou 2, **caractérisé en ce que** des aromatiques monovalents et/ou des hétéroatomes sont utilisés.

4. Hydroprimer selon l'une des revendications 2 ou 3, **caractérisé en ce que** l'on utilise le benzène, le toluène, le o-, m- et/ou p-xylène, le mésitylène, le pseudocumol, l'héméllitol, l'éthylbenzène, le cumol, le p-cumol, le tert.-butylbenzène, le chlorobenzène, le o-, m- et/ou p-dichlorobenzène, le fluorobenzène, le o-, m- et/ou p-difluorobenzène, le perfluorobenzène, le nitrobenzène, le benzonitrile, le méthoxybenzène, l'éthoxybenzène ou le thiophène.

5. Hydroprimer selon l'une des revendications 1 à 4, **caractérisé en ce que** la dispersion de polyuréthanne (A) contient au moins un polyester-polyuréthanne (A) avec des groupes (a11) fonctionnels (potentiellement) cationiques ou des groupes (a12) fonctionnels (potentiellement) anioniques et/ou des groupes (a13) fonctionnels non ioniques à base de polyalkylène-éthers.

6. Hydroprimer selon la revendication 5, **caractérisé en ce que** les groupes (a11) fonctionnels potentiellement cationiques sont des groupes amino primaires, secondaires ou tertiaires, des groupes sulfure secondaires ou des groupes phosphine tertiaires, les groupes (a11) fonctionnels cationiques sont des groupes ammonium secondaires, tertiaires ou quaternaires, des groupes sulfonium tertiaires ou des groupes phosphonium quaternaires, les groupes (a12) fonctionnels potentiellement anioniques sont des groupes d'acide carboxylique, sulfonique ou phosphonique et les groupes (a12) fonctionnels anioniques sont des groupes carboxylate, sulfonate ou phosphonate.

7. Hydroprimer selon l'une des revendications 1 à 8, **caractérisé en ce que** le polyester-polyuréthanne (A) peut être préparé par la réaction de :
- polyesterpolyols et
- composés par lesquels les groupes (a11) ou (a12) (potentiellement) ioniques stabilisateurs et/ou les groupes (a13) fonctionnels non ioniques sont introduits ainsi qu'éventuellement
- des polyamines et
- des alcools aminés
avec des polyisocyanates.

8. Hydroprimer selon l'une des revendications 1 à 6, **caractérisé en ce que** les polyesterpolyols sont obtenus par la réaction :
- d'acides polycarboxyliques saturés et/ou insaturés éventuellement sulfonés ou leurs dérivés aptes à l'estérification, éventuellement avec des acides monocarboxyliques ainsi que
- de polyols saturés et/ou insaturés, éventuellement avec des monools.

9. Hydroprimer selon l'une des revendications 1 à 8, **caractérisé en ce que** des pigments métalliques, des suies de conductivité, des pigments nacrés dopés ou du sulfate de baryum conducteur, en particulier des suies de conductivité sont utilisés comme pigments (B) électriquement conducteurs.

10. Hydroprimer selon l'une des revendications 1 à 9, **caractérisé en ce qu'**il contient des pigments non conducteurs électriquement et/ou des additifs de peinture (C).

11. Hydroprimer selon l'une des revendications 1 à 10, **caractérisé en ce qu'**il présente une teneur en matières solides de 30 à 80 % en poids par rapport à l'hydroprimer.

12. Utilisation de l'hydroprimer selon l'une des revendications 1 à 11, pour la préparation de peintures multicouches conférant une couleur et/ou un effet.

13. Procédé de préparation de peintures multicouches conférant une couleur et/ou un effet sur des pièces en plastique par :
1a) application de l'hydroprimer électriquement conducteur selon l'une des revendications 1 à 11, et durcissement thermique de la couche d'hydroprimer obtenue, ce qui conduit à la peinture hydroprimer électriquement conductrice ou, en variante
1b) application de l'hydroprimer électriquement conducteur selon l'une des revendications 1 à 11, séchage de la couche obtenue d'hydroprimer électriquement conducteur, application d'une couche d'hydroprimer transparente et durcissement thermique conjoint de la couche obtenue d'hydroprimer électriquement conducteur et de la couche d'hydroprimer transparente, ce qui donne la peinture hydroprimer électriquement conductrice et la peinture d'hydroprimer transparente; et
2a) application d'une peinture de couverture unie et durcissement thermique de la couche de peinture de couverture unie obtenue, ce qui conduit à une peinture de couverture unie; ou, en variante
2b) application d'une peinture de base aqueuse et séchage de la couche de peinture de base aqueuse obtenue, et
3) application d'une peinture transparente et durcissement thermique conjoint ou durcissement thermique et durcissement à la lumière actinique de la couche de peinture transparente obtenue et de la couche de peinture de base aqueuse, ce qui conduit à la peinture de base et à la peinture transparente.

14. Procédé selon la revendication 13, **caractérisé en ce que** :
4) la peinture transparente (3) est recouverte d'une peinture transparente supplémentaire et la couche de peinture transparente obtenue est durcie thermiquement et/ou avec un rayonnement actinique, ce qui conduit à une peinture transparente très résistante aux griffes (sealer).

15. Peinture multicouche conférant une couleur et/ou un effet pour des pièces en plastique, qui contient les couches suivantes superposées dans l'ordre indiqué :
1a) une peinture hydroprimer électriquement conductrice ou, en variante,
1a) une peinture hydroprimer électriquement conductrice et
1b) une peinture hydroprimer transparente ainsi que
2a) une peinture de couverture unie ou, en variante,
2b) une peinture de base et
3) une peinture transparente,
**caractérisée en ce qu'**un hydroprimer selon l'une des revendications 1 à 11 est utilisé.

16. Peinture multicouche conférant une couleur et/ou un effet selon la revendication 15, **caractérisée en ce que** la peinture transparente (3) est revêtue d'un sealer (4).

17. Pièces en plastique revêtues d'au moins une peinture multicouche conférant une couleur et/ou un effet selon la revendication 15 ou 16 et/ou au moins une peinture multicouche conférant une couleur et/ou un effet à préparer selon l'une des revendications 13 ou 14.

18. Utilisation des pièces en plastique selon la revendication 17 pour la préparation de carrosseries pour voitures et pour cabines de véhicules utilitaires.
